**Europäisches Patentamt**

**European Patent Office**

**Office européen des brevets**

(19)

(11) Publication number: **0 111 208**

**A1**

(12)

# EUROPEAN PATENT APPLICATION

(21) Application number: **83111681.9**

(22) Date of filing: **23.11.83**

(51) Int. Cl.³: **F 15 B 11/05**
**F 16 H 39/50**

(30) Priority: **26.11.82 US 444691**

(43) Date of publication of application:
**20.06.84 Bulletin 84/25**

(84) Designated Contracting States:
**DE FR GB SE**

(71) Applicant: **Vickers, Incorporated**
**1401 Crooks Road**
**Troy Michigan 48084(US)**

(72) Inventor: **Lonnemo, Kurt Roland**
**1835 Lakeview Court**
**Bloomfield Hills Michigan 48013(US)**

(74) Representative: **Blumbach Weser Bergen Kramer**
**Zwirner Hoffmann Patentanwälte**
**Sonnenbergerstrasse 43**
**D-6200 Wiesbaden 1(DE)**

(54) **Power transmission.**

(57) A hydraulic control system comprising a hydraulic actuator (15) having opposed openings (A,B) adapted to alternately function as inlets and outlets for moving the element (16) of the actuator (15) in opposite directions, a variable displacement pump (12) with load sensing control for supplying fluid to the actuator (15), a pilot operated meter-in directional (21) valve to which the fluid from the pump (12) is supplied for controlling the direction of movement of the actuator (15), pilot operated meter-out valves (26,27) associated with each opening of the actuator for controlling the flow out of said actuator, a pilot controller (18) and an engine anti-stall control (51) for sensing the flow from the pilot pressure supply pump (50) when the speed of the prime mover is decreased below a predetermined value due to a larger load demand upon the prime mover and operable to decrease the pressure of pilot pressure fluid supplied to the pilot controller (18) thereby causing the directional valve (21) to be moved toward a closed position in proportion to the decrease in supply pressure of pilot pressure fluid so that the flow demand from the variable displacement pump (12) is in turn reduced causing the variable displacement pump (12) to lessen its output and permitting the speed of the prime mover to be maintained at the original predetermined value.

EP 0 111 208 A1

FIG. 1

POWER TRANSMISSION

This invention relates to power transmissions and particularly to hydraulic circuits for actuators such as are found in earthmoving equipment including excavators and cranes.

Background and Summary
of the Invention

In hydraulic circuits which are utilized in connection with a prime mover such as an engine and which include pumps driven by the engine, a common problem is the tendency for the engine to stall-out in those instances where the installed hydraulic power of the circuit exceeds the power of the engine. Typical instances where this might occur are in the use of earthmoving equipment such as excavators, front end loaders, and cranes.

A typical hydraulic circuit comprises hydraulic actuators having opposed openings adapted to alternately function as inlets and outlets for moving the element of the actuator in opposite directions, a variable displacement pump with load sensing control for supplying fluid to the actuators, and a directional valve to which the fluid from the pump is supplied.

The directional valve is pilot controlled by pilot pressure from controllers which are manually, electrically or electronically operated.

It has heretofore been suggested that control be achieved by constant torque control or speed sensing control of the pumps. Among the disadvantages of such controls are the loss of power, the high cost, and difficulty of adjustment.

Accordingly, among the objectives of the present invention are to provide a hydraulic system wherein stall-out is obviated in a low cost, easy manner; wherein lower power consumption is required; wherein the system can be readily adjusted for different operating conditions; wherein the system is unaffected by the operation of different actuators; wherein the system can be adapted to one of a plurality of actuators; wherein the system provides full freedom of choice of priorities as to which of a plurality of actuators will have full flow without affecting the functioning of the other actuators; wherein the system can be adapted to the use of several main pumps, each supplying a plurality of actuators wherein the priority of one group of actuators can be different than the other group of actuators; wherein the operator cannot override the system; and wherein the system can be used at and adjusted for use at low speeds of the prime mover.

In accordance with the invention, the pilot pressure control circuit which supplies pilot pressure to the pilot controllers for controlling the directional valves is modified such that when the hydraulic load demand tends to cause the engine to stall, the pilot pressure to the directional valves is reduced so that the directional valve is moved toward a centered or closed position thereby lessening the demand on the main pump or pumps of the hydraulic system thereby causing the pump to downstroke thereby preventing the stalling of the engine.

## Description of the Drawings

FIG. 1 is a schematic drawing of the hydraulic circuit embodying the invention.

FIG. 2 is a schematic drawing of the pilot pressure supply circuit embodying the invention.

FIG. 3 is a schematic drawing of a hydraulic circuit comprising a plurality of actuator systems.

## Description

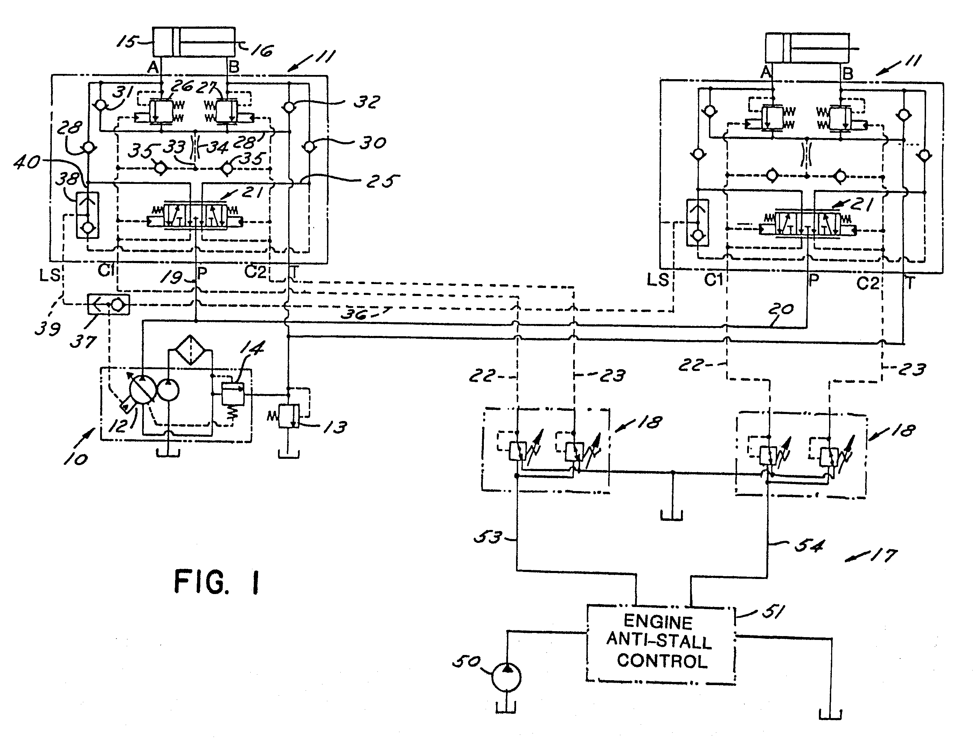

Referring to FIG. 1, the hydraulic system embodying the invention comprises a variable displacement pump system 10 driven by the prime mover such as the diesel engine that supplied hydraulic fluid to a plurality of actuator circuits or valve systems 11. Pump system 10 is of the well known load sensing type and comprises a variable displacement pump 12, back pressure valve 13 associated with a tank or return line to minimize cavitation when an overrunning load tends to drive the actuator down. A charge pump relief valve 14 is provided to take excess flow above the inlet requirements of the pump and apply it to the back pressure valve 13 to augment the fluid available to the actuator. Each actuator circuit 11 includes an actuator 15, herein shown as a hydraulic cylinder, having a rod 16 that is moved in opposite directions by hydraulic fluid supplied from the variable displacement pump system 10 which has the load sensing control in accordance with conventional construction. The hydraulic system further includes a hydraulic pilot pressure circuit 17. Circuit 17 includes a manually operated pilot controller 18 for each circuit 11, that directs a pilot pressure to circuit 11 for controlling the direction of movement of the actuator, as presently described. Controller 18 may be electrically or electronically controlled instead of manually controlled.

Fluid from the pump 10 is directed to the line 19 and line 20 to a directional valve in the form of a meter-in valve 21 in each actuator circuit 11 that functions to direct and control the flow of hydraulic fluid to one or the other end of the actuator 15. The meter-in valve 21 is pilot pressure controlled by controller, through lines 22, 23 to the opposed ends thereof, as presently described. Depending upon the direction of movement of the valve 21, hydraulic fluid passes through lines 24, 25 to one or the other end of the actuator 15.

Each actuator circuit 11 further includes a meter-out valve 26, 27 associated with each end of the actuator in lines 24, 25 for controlling the flow of fluid from the end of the actuator to which hydraulic fluid is not flowing from the pump to a tank passage 28, as presently described.

Each actuator circuit 11 further includes spring loaded poppet valves 29, 30 in the lines 24, 25 and spring loaded anti-cavitation valves 31, 32 which are adapted to open the lines 24, 25 to the tank passage 28. In addition, spring loaded poppet valves, not shown, are associated with each meter-out valves 26, 27. A bleed line 33 having an orifice 34 extends from passage 28 to meter-out valves 26, 27 and to the pilot control lines 22, 23 through check valves 35.

Meter-in valve 21 comprises a bore in which a spool is positioned and the absence of pilot pressure maintained in a neutral position by springs. The spool normally blocks the flow from the pressure passage 19 or 20 to the passages. When pilot pressure is applied to either line 24 or 25, the meter-in spool is moved in the direction of the pressure until a force balance exists among the pilot pressure, the spring load and the flow forces. The direction of movement determines which of the lines 24, 25 is provided with fluid under pressure from passage 19 or 20.

When pilot pressure is applied to either line 22 or 23, leading to meter-out valves 26 or 27, the valve is actuated to vent the associated end of actuator 15 to tank passage 28.

It can thus be seen that the same pilot pressure which functions to determine the direction of opening of the meter-in valve also functions to determine and control the opening of the appropriate meter-out valve so that the fluid in the actuator can return to the tank line.

Provision is made for sensing the maximum load pressure in one of a series of actuator circuits 11 controlling a plurality of actuators and applying that higher pressure to the load sensitive variable displacement pump 10. Each valve system 11 includes a line 36 extending to a shuttle valve 37 that receives load pressure from an adjacent actuator through line 36. Shuttle valve 37 senses which of the two pressures is greater and shifts to apply the same to a shuttle valve 38 through line 39. A line 40 extends from passage 24 to shuttle valve 38. Shuttle valve 38 senses which of the pressures is greater and shifts to apply the higher pressure to pump 12. Thus, each valve system in succession incorporates shuttle valves 37, 38, which compare the load pressure therein with the load pressure of an adjacent valve system and transmit the higher pressure to the adjacent valve system in succession and finally apply the highest load pressure to pump 12.

The above described circuit is shown and described in the aforementioned United States patent 4,201,052. The details of the preferred construction of the elements of the hydraulic circuit are more specifically described in the aforementioned United States patent 4,201,052 which is incorporated herein by reference.

In accordance with the invention, the pilot pressure control circuit comprises a pilot pressure pump 50 driven by the prime mover such as a diesel engine and having an output flow proportional to the speed of the engine. The output of the pilot pressure pump 50 is directed to an engine anti-stall control 51 that functions, when the hydraulic load demand tends to cause the engine to stall to reduce the pilot pressure to the controllers and in turn, the pilot operated directional valves so that the directional valve is moved toward a centered position thereby lessening the demand on the main pump 12 of the hydraulic system and causing the pump 12 to downstroke preventing the engine from stalling.

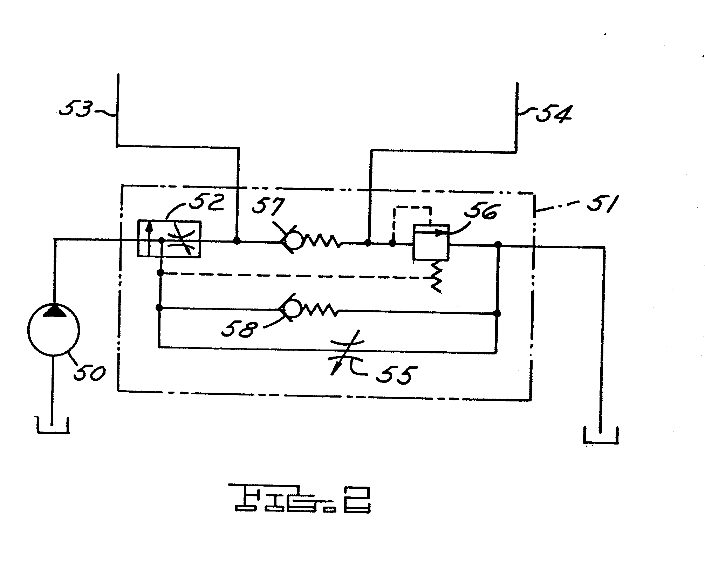

Referring to FIG. 2, the anti-stall control 51 comprises a flow control valve 52·of the variable restrictor type to lines 53, 54 extending to the pilot controllers 18. The flow control valve 52 is operable to divert fluid flowing to the hydraulic controllers 18 and is set to divert fluid when the speed of the engine exceeds a predetermined percentage of a engine full load governed speed, for example, 90%. The diverted fluid passes across a restrictor in the form of a variable orifice 55 and is operable upon a predetermined pressure drop to actuate a pilot operated relief valve 56 which determines the normal supply pressure. When the speed is below the predetermined percentage the pilot supply pressure is controlled by the spring of pilot operated relief valve 56. A spring loaded check valve 57 provides different levels of pilot control valve supply pressure to the actuator circuits 11 if desired. A spring loaded check valve 58 serves as a maximum pressure device in the supply circuit.

In operation, as the engine speed is reduced to a

0111208

tendency to stall when the demands on the hydraulic circuit exceed the power of the engine, the anti-stall control 51 reduces the pressure being supplied to the pilot controllers and, as a result, the directional valve 21 will tend to close in proportion to the reduced pressure of the pilot pressure. The load sensing pressure compensated valves thereby lessen the flow demand on the pump 12 which will downstroke so that engine speed will be maintained at close to the original value, usually full load governed rpm.

It can thus be seen that the system utilizes one hydraulic pilot pressure circuit for all of the hydraulic circuits which are being controlled and requires the addition only of the flow control valve 52 and the restrictor 55 to the normal pilot pressure circuit which comprises the pilot pump 50 and the pilot operated valve 56.

Ease of adjustment of the characteristics desired in the variable displacement pump can be made by adjusting the restrictor of the valve and the orifice. Similarly, the adjustment of the maximum pilot control valve supply pressure is readily adjusted by adjusting the restrictor 55. Since the system only adds the pressure loss across the flow control valve 52, a very low order of power is consumed or lost. Inasmuch as the flow control valve 52 is not affected by different functions of differing hydraulic circuits, there is no interaction between the machine or actuator functions. Where one of the actuators has a more critical tendency to cause the stall-out condition, the hydraulic pilot pressure circuit can be adjusted to respond to reduce the pilot pressure to such a system while the characteristics of the remaining actuator circuits will be set by proper selection of the springs in the directional valve 21 so that the other circuits will function fully at the reduced pressure.

Inasmuch as the position and movement of the pilot controller does not affect the anti-stall circuit, the operator cannot override the system. Finally, by proper selection and adjustment, the necessary pilot pressure for operation even at low speeds can be achieved. More specifically, the springs in meter-in valve 21 and the spring in relief valve 56 can be selected to provide full operation of the meter-in valve 21 at a lower engine speed.

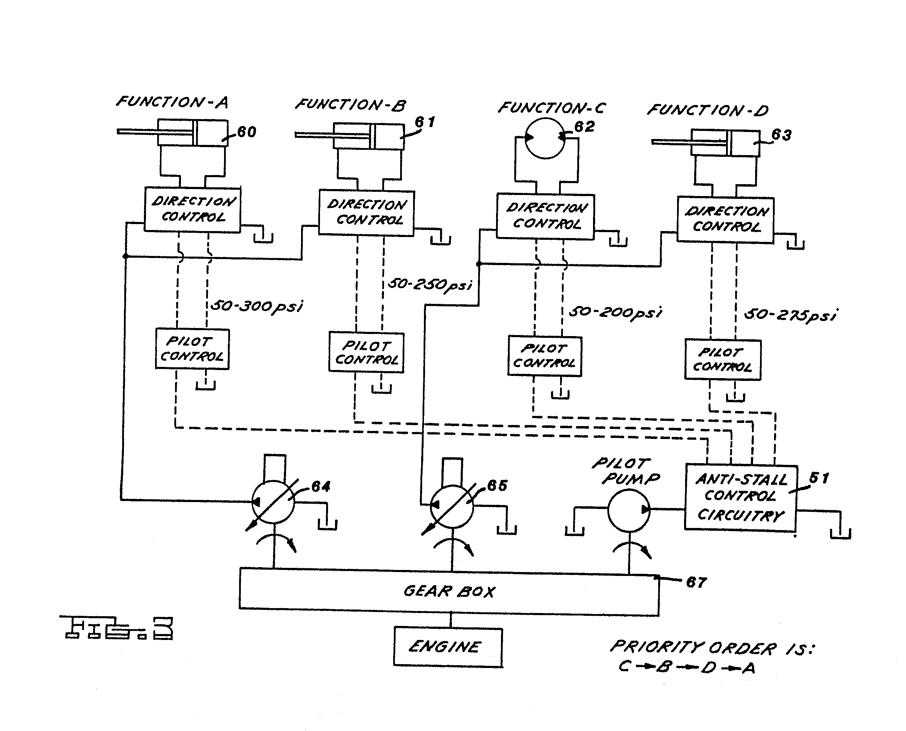

Referring to FIG. 3, a hydraulic circuit is shown comprising a plurality of actuators 60, 61, 62 and 63 performing functions A, B, C and D, respectively. Each of the actuators 60, 61, 62 and 63 is provided with a direction control comprising a valve system 11 and respective pilot controls 18 as heretofore described. Actuators 60, 61 are supplied with fluid by a first load sensing variable displacement pump 64 while actuators 62, 63 are supplied by a second load sensing variable displacement pump 65. The main pumps 64, 65 and pilot pump for the anti-stall control circuitry 51 are driven by a prime mover such as an engine 66 through a gear box 67.

The springs of the valve systems 11 are adjusted such that the respective valve systems operated over a desired range of pressures, for example, as follows:

        function A        50-300 p.s.i.
        function B        50-250 p.s.i.
        function C        50-200 p.s.i.
        function D        50-275 p.s.i.

If it is desired to give priority to function C, then the anti-stall control circuitry is adjusted to insure that the direction control 11 of actuator 62 will function over the full range of 50-200 p.s.i. and the pump 64 will downstroke before pump 65.

Thus the priority of the actuator control is:

        C ⟶ B ⟶ D ⟶ A

Claims

1. A hydraulic control system comprising

a hydraulic actuator (15) having opposed openings adapted to alternately function as inlets and outlets for moving the element of the actuator in opposite directions, a variable displacement pump (12) with load sensing control for supplying fluid to said actuator, a directional valve (21) to which the fluid from the pump is supplied, said valve being pilot controlled, a pilot controller (18) for alternately supplying fluid at pilot pressure to said directional valve for controlling the direction of movement of the directional valve, a pair of lines extending from said directional valve (18) to said respective openings of said actuator, a pilot pressure hydraulic circuit for supplying fluid to the pilot controller comprising the improvement comprising

a pilot pressure pump (50) driven by the same prime mover as the variable displacement pump (12) and having an output flow proportional to the speed of the prime mover, and means (51) for sensing the flow from the pilot pressure supply pump when the speed of the prime mover is decreased below a predetermined value due to a larger load demand upon the prime mover and operable to decrease the pressure of pilot pressure fluid supplied to the pilot controller thereby causing the directional valve to be moved toward a closed position in proportion to the decrease in supply pressure of pilot pressure fluid so that the flow demand from the variable displacement pump is in turn reduced causing the variable displacement pump to lessen its output and permitting the speed of the prime mover to be maintained at the original predetermined value.

2.    The hydraulic circuit set forth in claim 1 wherein said last mentioned means (51) comprises

a flow control vavle (52) operable to divert fluid flowing to the hydraulic pilot controller (18) when the speed of the prime mover is higher than a predetermined percentage of the prime full load governed speed,

a pilot operated relief valve (56) operable to determine normal supply pressure,

a restrictor (55) associated with the flow control valve and operable by the divertef flow from said flow control valve to operate said pilot operated relief valve (56) when the pressure drop across said orifice (55) exceeds a predetermined value.

3.   The hydraulic circuit set forth in claim 2 wherein said restrictor (55) is of the variable type.

4.   The hydraulic circuit set forth in claim 2 wherein said flow control valve (52) includes a variable orifice.

5.   The hydraulic circuit set forth in claim 1 wherein said pilot valve circuit including a maximum pressure relief valve (58).

6.   The hydraulic circuit set forth in claim 1 including

a second hydraulic circuit for operating a separate actuator (16),

said second supply circuit comprising a separate pilot controller (18),

said second pilot controller being operable to receive pilot pressure from said pilot pressure circuit.

7.   The hydraulic circuit set forth in claim 6 including a check valve (57) separating the supply pressure to said first and second circuits in order to provide different levels of pilot control valve pressure to said circuits.

FIG. I

ENGINE
ANTI-STALL
CONTROL

FIG. 2

FUNCTION-A    FUNCTION-B    FUNCTION-C    FUNCTION-D

60   61   62   63

DIRECTION CONTROL (×4)

50-300 psi   50-250 psi   50-200 psi   50-275 psi

PILOT CONTROL (×4)

PILOT PUMP

64   65   ANTI-STALL CONTROL CIRCUITRY   51

GEAR BOX   67

ENGINE

PRIORITY ORDER IS:
C → B → D → A

FIG. 3

## European Patent Office

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (Int. Cl ³) |
|---|---|---|---|
| A | DE-A-2 854 593  (NORDHYDRAULIC AB) <br> * Whole document * | 1 | F 15 B  11/05 <br> F 16 H  39/50 |
| A | DE-A-3 007 781  (LINDE) <br> * Pages 8,9,10; figures * | 1 | |
| A | US-A-3 826 090  (BAHL) | 1 | |

TECHNICAL FIELDS SEARCHED (Int. Cl. ³)

F 15 B  11/00
F 16 H  39/00

The present search report has been drawn up for all claims

| Place of search <br> THE HAGUE | Date of completion of the search <br> 28-02-1984 | Examiner <br> FLORES E. |
|---|---|---|